# EUROPÄISCHE PATENTANMELDUNG

(11) **EP 3 513 939 A1**
(43) Veröffentlichungstag der Anmeldung: **24.07.2019**
(21) Anmeldenummer: 18152544.5
(22) Anmeldetag: 19.01.2018
(51) Int. Cl.: B29B 15/12

(54) **VORRICHTUNG UND VERFAHREN ZUR FERTIGUNG EINES FASERN- UND MATRIXKUNSTSTOFF ENTHALTENDEN VERBUNDWERKSTOFFES**

(71) Anmelder: Fraunhofer-Gesellschaft zur Förderung der angewandten Forschung e.V., 80686 München (DE)
(72) Erfinder: Michel, Peter, 95028 Hof (DE); Jahn, Ivonne, 06774 Muldestausee / Plodda (DE)
(74) Vertreter: Friese Goeden Patentanwälte PartGmbB

(57) **Zusammenfassung**

Die Erfindung betrifft eine Vorrichtung (1) zur Fertigung eines Fasern und Matrixkunststoff enthaltenden Verbundwerkstoffes, enthaltend zumindest eine Faserzuführvorrichtung (2) und zumindest einen Extruder (4) und zumindest ein Imprägnierwerkzeug (5), welches zumindest einen Separator (54) enthält, welcher dazu eingerichtet ist, ein erstes Faserbündel von einem zweiten Faserbündel separiert durch das Imprägnierwerkzeug (5) zu führen. Weiterhin betrifft die Erfindung ein Verfahren zur Fertigung eines Fasern und Matrixkunststoff enthaltenden Verbundwerkstoffes.

## Beschreibung

Die Erfindung betrifft eine Vorrichtung zur Fertigung eines Fasern und Matrixkunststoff enthaltenden Verbundwerkstoffes, enthaltend zumindest eine Faserzuführvorrichtung und zumindest einen Extruder und zumindest ein Imprägnierwerkzeug. Weiterhin betrifft die Erfindung ein Verfahren zur Fertigung eines Fasern- und Matrixkunststoff enthaltenden Verbundwerkstoffes, bei welchem ein Faserbündel aus zumindest einer Faserzuführvorrichtung mit Matrixkunststoff aus zumindest einem Extruder in zumindest einem Imprägnierwerkzeug in Kontakt gebracht wird. Verbundwerkstoffe dieser Art können beispielsweise als Prepregs zur Herstellung faserverstärkter Kunststoffbauteile im 3D-Druck Verwendung finden.

Aus der DE 10 2016 201 153 A1 ist bekannt, ein Faserbündel bzw. Roving durch ein Imprägnierwerkzeug zu führen. Dem Imprägnierwerkzeug wird zusätzlich ein thermoplastischer Matrixkunststoff zugeführt, welcher beim Durchlauf des Faserbündels durch das Imprägnierwerkzeug das Faserbündel benetzt und umschließt. Der so hergestellte Verbundwerkstoffweist in der Regel eine Dicke zwischen 100 µm und 300 µm sowie eine Breite zwischen etwa 150 mm bis 1200 mm auf.

Aus der WO 2017/081253 A1 ist ein Verfahren zur additiven Fertigung eines Bauteils bekannt. Dieses Verfahren sieht vor, thermoplastischen Kunststoff aus einer Extruderdüse in vorgebbaren Raumbereichen abzulegen und auf diese Weise schichtweise das gewünschte Bauteil aufzubauen. Zum Einbringen einer Faserverstärkung können die vorstehend beschriebenen Verbundwerkstoffe bzw. Prepregs auf dem entstehenden Halbzeug abgelegt und nachfolgend mit thermoplastischen Kunststoff überspritzt und somit eingebettet werden.

Zur Herstellung filigraner Strukturen werden die ursprünglich in einer Breite zwischen 150 mm und 1200 mm hergestellten Prepregs durch Schneiden auf Breiten zwischen 0,5 mm und 3 mm zerteilt. Aufgrund des nicht perfekten Fasergleichlaufs innerhalb des Verbundwerkstoffes kommt es dabei zur Beschädigung von Fasern an der Schnittkante. Darüber hinaus sind die Fasern an der Schnittkante nicht vollständig von Matrixkunststoff umgeben, sodass diese im späteren Betrieb des Bauteils durch Kapillarwirkung Feuchtigkeit aufnehmen können. Hierdurch werden die Gebrauchseigenschaften des auf diese Weise hergestellten Kunststoffbauteils nachteilig beeinflusst. Schließlich lösen sich durch den Trennvorgang mechanische Spannungen innerhalb des Verbundwerkstoffes, sodass der schmale, durch Schneiden erhaltene Streifen eine schlechte Planlage bei der Verarbeitung aufweist.

Ausgehend von diesem Stand der Technik liegt der Erfindung somit die Aufgabe zugrunde, ein Verfahren und eine Vorrichtung zur Herstellung von Verbundwerkstoffen anzugeben, welche verbesserte Eigenschaften aufweisen.

Die Aufgabe wird erfindungsgemäß durch eine Vorrichtung gemäß Anspruch 1 und ein Verfahren nach Anspruch 7 gelöst. Vorteilhafte Weiterbildungen der Erfindung finden sich in den Unteransprüchen.

Erfindungsgemäß wird vorgeschlagen, Verbundwerkstoffe bzw. Prepregs herzustellen, welche Fasern und einen thermoplastischen Matrixkunststoff enthalten. Die Fasern können beispielsweise ausgewählt sein aus Glasfasern und/oder Kohlefasern und/oder Aramidfasern. Der Matrixkunststoff kann in einigen Ausführungsformen Polyethylen, Polypropylen, Polyamid, Polyphenylensulfid und/oder Polyetheretherketon enthalten oder daraus bestehen. Zur Herstellung können einzelne Fasern bzw. Faserbündel über eine Faserzuführvorrichtung einem Imprägnierwerkzeug zugeführt werden. Die Fasern können als Endlosfasern beispielweise von einer Vorratsrolle abgewickelt werden und das Imprägnierwerkzeug von einem Einlass zum Auslass durchlaufen.

Weiterhin kann mit einem Extruder zumindest ein Matrixkunststoff dem Imprägnierwerkzeug zugeführt werden. Das Imprägnierwerkzeug ist dazu eingerichtet und bestimmt, eine hinreichende Benetzung der einzelnen Fasern eines Faserbündels mit dem Matrixkunststoff sicherzustellen und die Faser im Matrixkunststoff einzubetten. Dabei kann der Faserfüllgrad des fertigen Verbundwerkstoffes zwischen etwa 70 % und etwa 90 % betragen. In einigen Ausführungsformen der Erfindung treten die Fasern an keiner Stelle des fertigen Verbundwerkstoffes an die Oberfläche, sondern sind vollständig vom Matrixkunststoff umschlossen.

Erfindungsgemäß wird nun vorgeschlagen, dass das Imprägnierwerkzeug zumindest einen Separator enthält, welcher dazu eingerichtet ist, ein erstes Faserbündel von einem zweiten Faserbündel separiert durch das Imprägnierwerkzeug zu führen. Auf diese Weise können statt einem einzelnen Verbundwerkstoff, mit einer vergleichsweise großen Breite von beispielsweise 150 mm bis 1200 mm eine Vielzahl kleinerer bzw. schmälerer Verbundwerkstoffe hergestellt werden. Beispielsweise können die einzelnen Verbundwerkstoffe nur noch eine Breite zwischen etwa 0,3 mm und etwa 3 mm bzw. von 0,2 mm bis etwa 5 mm aufweisen. Da durch die erfindungsgemäß vorgesehenen Separatoren jedoch eine Vielzahl von Verbundwerkstoffen mit dieser geringen Breite parallel hergestellt werden können, kann die Herstellung einer großen Anzahl solcher bandförmiger Verbundwerkstoffe gleichwohl rasch und kostengünstig erfolgen. Anders als beim nachträglichen Schneiden eines breiten Verbundwerkstoffes in schmalere Streifen werden bei der initialen Herstellung schmaler Streifen keine Fasern geschnitten. Somit kommt es auch nicht zur Freilegung der Fasern an den Schnittkanten und der Gefahr von nachträglichem Eindringen von Flüssigkeit durch Kapillarwirkung, beispielsweise Feuchte oder Lösemittel. Darüber hinaus können die Verbundwerkstoffe durch das erfindungsgemäße Verfahren weitgehend spannungsfrei hergestellt werden, sodass diese sich nicht wellen und bei der weiteren Verarbeitung im 3D-Druck eine gute Planlage aufweisen. Hierdurch kann die Einbettung mit Matrixkunststoff im 3D-Druck oder Spritzguss vereinfacht sein, sodass Bauteile höherer Qualität hergestellt werden können und/oder der apparative Aufwand bei der Herstellung faserverstärkter Kunststoffbauteile im 3D-Druck reduziert ist.

Die erfindungsgemäß eingesetzten Separatoren können beispielsweise in Form von Führungsstiften in ein an sich bekanntes Imprägnierwerkzeug angebracht werden. Hierdurch wird die Kontaktfläche bzw. das ursprünglich gassenfreie Faserbett in eine Mehrzahl einzelner Gassen unterteilt, in welchen Endlosband des Verbundwerkstoffes geringerer Breite als der Werkzeugbreite hergestellt wird. In anderen Ausführungsformen der Erfindung können die Separatoren bei der Herstellung des Imprägnierwerkzeuges eingebracht werden, beispielsweise durch spannende Bearbeitung der Kontaktfläche, wobei die einzelnen Separatoren über die Kontaktfläche überstehen.

Die Separatoren können einen polygonalen, ovalen oder runden Querschnitt aufweisen. In einigen Ausführungsformen der Erfindung können die Separatoren auf der ein- oder auslaufenden Seite abgerundet oder spitz zulaufend ausgeführt sein, um beispielsweise die einlaufenden Fasern eindeutig zu separieren und einer Gasse innerhalb des Imprägnierwerkzeuges zuzuführen.

In einigen Ausführungsformen der Erfindung kann das Imprägnierwerkzeug eine erste Werkzeughälfte und eine zweite Werkzeughälfte aufweisen, welche jeweils eine Kontaktfläche aufweisen, wobei der zumindest eine Separator über die Kontaktfläche der ersten Werkzeughälfte hervorsteht und in eine zugeordnete Ausnehmung der zweiten Werkzeughälfte eingreift, wenn das Imprägnierwerkzeug geschlossen ist. Hierdurch wird vermieden, dass die Fasern beim Durchlauf durch das Imprägnierwerkzeug über den Separator in eine benachbarte Gasse laufen und die hergestellten Verbundwerkstoffe somit in Folge unzureichender Trennung mindere Qualität aufweisen.

In einigen Ausführungsformen der Erfindung kann das Imprägnierwerkzeug mit Schwingungsanregungsmitteln gekoppelt sein, beispielsweise mit Piezoelementen oder elektromagnetischen oder elektromechanischen Antrieben. Durch die Vibration des Imprägnierwerkzeuges kann das Eindringen des Matrixkunststoffes zwischen die Fasern des Faserbündels erleichtert werden und auf diese Weise eine bessere Imprägnierung der Fasern mit dem Matrixkunststoff und daraus resultierend eine bessere Produktqualität erreicht werden.

In einigen Ausführungsformen der Erfindung kann das Imprägnierwerkzeug bzw. die beiden Hälften des Imprägnierwerkzeuges wellenförmig ausgestaltet sein, wobei ein Vorsprung der einen Werkzeughälfte in eine Vertiefung der anderen Werkzeughälfte eingreift. Dies führt zu einem wellenförmigen Durchlauf der Fasern bzw. der Faserbündel, wobei sich an jeder Umlenkung eine Kompressionszone ausbildet, welche die Imprägnierung der Fasern mit dem Matrixkunststoff verbessert. Hierdurch kann gegenüber planen Werkzeuggeometrien eine verbesserte Imprägnierung bei gleicher Werkzeuglänge oder eine verkürzte Werkzeuglänge bei vergleichbarer Imprägnierung erzielt werden.

In einigen Ausführungsformen der Erfindung kann das Imprägnierwerkzeug an seiner auslaufenden Seite eine Formlippe aufweisen. Diese kann als Abstreiflippe ausgebildet sein und/oder mit Formgebungshilfen versehen sein, deren Querschnitt komplementär zum Querschnitt des Verbundwerkstoffes ist. Beispielsweise können die Formgebungshilfen als Nuten in die Formlippe eingearbeitet sein. Der Querschnitt dieser Nuten kann polygonal oder rund oder oval sein. Hierdurch wird den einzelnen Verbundwerkstoffen vor dem endgültigen Auskühlen und Verfestigen des Matrixkunststoffes eine vorgebbare Querschnittsform und -größe gegeben. Die Querschnittsform und -größe kann beispielsweise an die Geometrie angepasst werden, welche zur späteren Verarbeitung im 3D-Druck vorteilhaft ist bzw. welche an das zu fertigende Bauteil angepasst wird. In anderen Ausführungsformen der Erfindung können unterschiedliche Faser- oder Kunststoffqualitäten oder unterschiedliche Fadengewichte der Fasern durch die Querschnittsfläche kodiert werden. Beispielsweise kann eine erste, einfache Faserqualität mit einem runden Querschnitt versehen werden und eine zweite, höherwertige Faserqualität kann mit einem ovalen Querschnitt versehen werden. Dies erleichtert die spätere Verarbeitung im 3D-Druck oder Spritzguss, da nicht versehentlich falsche Fasern in die Maschine eingelegt werden. Hierdurch wird vermieden, dass Bauteile mit ungeeigneten Fasern hergestellt werden, welche die vorgesehene Gebrauchsfestigkeit nicht erreichen.

In einigen Ausführungsformen der Erfindung kann der Abstand benachbarter Separatoren zwischen etwa 300 µm und etwa 5000 µm betragen. In anderen Ausführungsformen der Erfindung kann der Abstand benachbarter Separatoren zwischen etwa 500 µm und etwa 4000 µm betragen. In wiederum anderen Ausführungsformen der Erfindung kann der Abstand benachbarter Separatoren zwischen etwa 600 µm und etwa 1800 µm betragen. Schließlich kann in einigen Ausführungsformen der Erfindung der Abstand benachbarter Separatoren zwischen etwa 700 µm und etwa 1500 µm betragen. Der Abstand der Separatoren beeinflusst unmittelbar die Breite des hergestellten Verbundmaterials bzw. Endlosbandes. In einigen Ausführungsformen der Erfindung kann das Imprägnierwerkzeug unterschiedliche Abstände zwischen den Separatoren aufweisen, sodass in einem Arbeitsgang Verbundwerkstoffe mit unterschiedlicher Breite hergestellt werden.

In einigen Ausführungsformen der Erfindung kann das Imprägnierwerkzeug Lochreihen aufweisen, welche in etwa rechtwinklig zur Faserdurchlaufrichtung verlaufen und in welche jeweils ein Separator eingesetzt werden kann. In diesem Fall kann durch Umstecken der Separatoren in unterschiedliche Löcher der Lochreihe der Abstand benachbarter Separatoren und damit die Breite des gefertigten Verbundwerkstoffes eingestellt werden.

In einigen Ausführungsformen der Erfindung verlaufen die durch benachbarte Separatoren begrenzten Gassen im Imprägnierwerkzeug in etwa in gerader Verlängerung der Formgebungshilfen der Formlippe. Auf diese Weise wird ein gerader Faserdurchlauf durch das Imprägnierwerkzeug sichergestellt. Dies vermeidet hohe Scherkräfte, welche zur Freilegung von Fasern oder zur Beschädigung von Fasern im fertigen Verbundwerkstoff führen können und reduziert die für den Durchlauf der Fasern durch das Imprägnierwerkzeug erforderlichen Zugkräfte.

In einigen Ausführungsformen der Erfindung kann die erfindungsgemäße Vorrichtung weiterhin zumindest einen Kalander enthalten. Der Kalander kann zumindest eine Kalanderwalze enthalten, welche Ausnehmungen aufweist, deren Querschnitte komplementär zum Querschnitt des Verbundwerkstoffes sind. Eine Kalanderwalze kann vorteilhaft dazu eingesetzt werden, vorhandene Lufteinschlüsse im Matrixkunststoff auszutragen und eine gewünschte Konsolidierung des Verbundwerkstoffes einzustellen. Gleichzeitig kann die Kalanderwalze Wärmeenergie aus dem Matrixkunststoff abführen und diesen dadurch abkühlen und verfestigen. In einigen Ausführungsformen der Erfindung kann der Querschnitt der Ausnehmungen der Kalanderwalze dem gewünschten Endquerschnitt des fertigen Verbundwerkstoffes entsprechen, sodass durch die Kalanderwalze die endgültige Formgebung erfolgt. In diesem Fall kann eine zugeordnete Formgebungshilfe der Formlippe das Halbzeug mit Übermaß ausgeben, welches schließlich im Kalander auf das Endmaß geformt wird. In anderen Ausführungsformen der Erfindung kann der Querschnitt der Formgebungshilfe der Formlippe mit dem Querschnitt der Ausnehmung der Kalanderwalze übereinstimmen.

In einigen Ausführungsformen der Erfindung kann die Faserzuführvorrichtung eine Faserspreizeinrichtung enthalten. Eine solche Faserspreizeinrichtung führt die Fasern separiert in das Imprägnierwerkzeug ein, sodass diese in einfacher Weise mit dem Matrixkunststoff in Kontakt gebracht und imprägniert werden können.

In einigen Ausführungsformen der Erfindung kann die Dicke des erfindungsgemäß hergestellten Verbundwerkstoffes zwischen etwa 100 µm und etwa 400 µm betragen. In anderen Ausführungsformen der Erfindung kann die Dicke des Verbundwerkstoffes zwischen etwa 150 µm und etwa 350 µm betragen. In anderen Ausführungsformen der Erfindung kann die Dicke des Verbundwerkstoffes zwischen etwa 150 µm und etwa 300 µm betragen. Schließlich kann die Dicke des Verbundwerkstoffes in einigen Ausführungsformen zwischen etwa 180 µm und etwa 250 µm betragen. Die Dicke des Verbundwerkstoffes kann im Falle eines zweiteiligen Werkzeuges durch den Abstand der beiden Werkzeughälften eingestellt werden. Die Werkzeughälften können hierzu beweglich in Führungen angeordnet sein, welche mit einem Pneumatik-, Hydraulik-, oder Linearantrieb bewegt werden können. Verbundwerkstoffe der genannten Dickenbereiche lassen sich vorteilhaft im 3D-Druck verarbeiten, da diese einerseits hohe Faserfüllgrade erlauben und andererseits aufgrund ihrer geringen Dicke durch Wärmeeintrag im Druckprozess ein erneutes Aufschmelzen des Matrixkunststoffes erlauben, woraus eine gute Verbindung mit dem Druckmaterial resultiert.

Nachfolgend soll die Erfindung anhand von Figuren ohne Beschränkung des allgemeinen Erfindungsgedankens näher erläutert werden. Dabei zeigt
Figur 1 eine erfindungsgemäße Vorrichtung zur Herstellung von Verbundwerkstoffen.
Figur 2 zeigt einen Ausschnitt aus dem Imprägnierwerkzeug der in Figur 1 gezeigten Vorrichtung.
Figur 3 zeigt einen Kalander in einer ersten Ausführungsform.
Figur 4 zeigt einen Kalander in einer zweiten Ausführungsform.
Figur 5 zeigt einen Kalander in einer dritten Ausführungsform.
Figur 6 zeigt einen Kalander in einer vierten Ausführungsform.

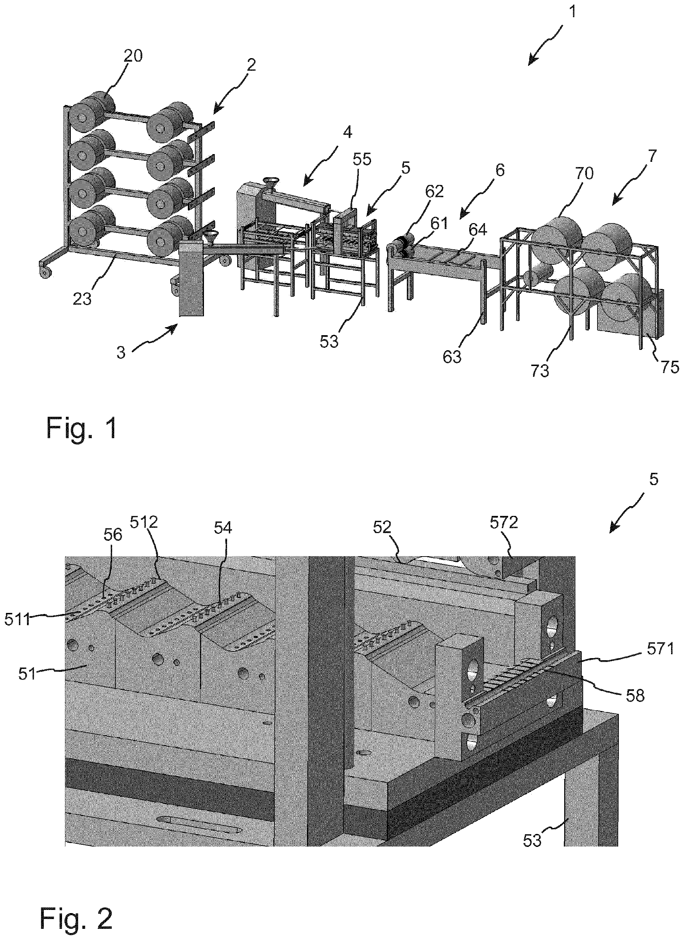

Anhand von Figur 1 wird eine Ausführungsform der erfindungsgemäßen Vorrichtung zur Herstellung von Verbundwerkstoffen gezeigt. Die herzustellenden Verbundwerkstoffe enthalten jeweils ein Bündel von Verstärkungsfasern, welche beispielsweise ausgewählt sein können aus Glasfasern, Kohlefasern, Aramidfasern oder Mischungen daraus. Die Fasern werden mit einem thermoplastischen Kunststoff imprägniert, welcher beispielsweise ausgewählt sein kann aus Polyethylen, Polypropylen, Polyetheretherketon oder weiteren, hier nicht explizit genannten Kunststoffen. Der Verbundwerkstoff wird fortlaufend als Endlosband hergestellt, welches sich beispielsweise als Prepreg für die Herstellung faserverstärkter Kunststoffbauteile eignet. Dieses Kunststoffbauteil kann beispielsweise im Spritzgussverfahren oder auch im 3D-Druck hergestellt sein.

Zur Herstellung des Verbundwerkstoffes werden Fasern von einer Faserzuführvorrichtung 2 zugeführt. Die Faserzuführvorrichtung 2 weist im dargestellten Ausführungsbeispiel einen Rahmen bzw. ein Gestell 23 auf, auf welchem eine Mehrzahl von Spulen 20 angeordnet ist. Die Spulen 20 enthalten die zu verarbeitenden Fasern. Dabei können unterschiedliche Faserqualität oder unterschiedliche Faserstärken auf unterschiedlichen Spulen vorhanden sein, um einen raschen Wechsel bei Produktionsänderungen zu ermöglichen. In anderen Ausführungsformen der Erfindung kann eine Mehrzahl von Spulen 20 mit identischem Fasermaterial bestückt sein, um diese parallel in die Vorrichtung 1 einzuführen.

Weiterhin zeigt Figur 1 eine optionale Faserspreizeinrichtung 3. Die Faserspreizeinrichtung 3 dient dazu, ein Faserbündel mit beispielsweise rundem Querschnitt so aufzuspreizen, dass die innen verdeckt im Faserbündel liegenden Fasern exponiert werden, um diese möglichst vollständig mit dem Matrixkunststoff zu imprägnieren. Hierzu kann das Faserbündel beispielsweise zu einem rechteckigen, vergleichsweise breiten Bündel aufgespreizt werden. Ein solches Bündel kann in einer Raumrichtung nur noch eine einzelne Faserlage enthalten, um eine optimale Benetzung zu ermöglichen. Es ist jedoch darauf hinzuweisen, dass die Verwendung einer Faserspreizeinrichtung 3 optional ist. Diese kann in anderen Ausführungsformen der Erfindung auch entfallen.

Schließlich enthält die erfindungsgemäße Vorrichtung zumindest einen Extruder 4. Der Extruder 4 dient dazu, den Matrixkunststoff auf eine vorgebbare Temperatur zu erwärmen und diesen als pastöses bzw. verflüssigtes Material bereitzustellen.

Nachfolgend werden sowohl die Fasern als auch der Matrixkunststoff dem Imprägnierwerkzeug 5 zugeführt, welches anhand von Figur 2 näher erläutert wird. Im Imprägnierwerkzeug 5 werden die Fasern nach Möglichkeit allseits vom Matrixkunststoff umschlossen bzw. imprägniert. Am Ausgang des Imprägnierwerkzeuges 5 kann eine Formlippe vorhanden sein, welche dem hergestellten Verbundwerkstoff ein gewünschtes Querschnittsprofil gibt.

Nach dem Verlassen des Imprägnierwerkzeuges 5 wird der Verbundwerkstoff einem optionalen Kalander 6 zugeführt. Der Kalander 6 weist im dargestellten Ausführungsformen zwei Kalanderwalzen 61 und 62 auf. Auch die Kalanderwalzen können Formgebungshilfen in Form von Ausnehmungen enthalten, welche dem Verbundwerkstoff eine gewünschte Querschnittfläche geben, Wärme aus dem Verbundwerkstoff austragen und Lunker bzw. Lufteinschlüsse aus dem Verbundwerkstoff entfernen. An die Kalanderwalzen 61 und 62 kann sich eine Kühlstrecke 64 anschließen, in welcher die Verbundwerkstoffe durch Luft-oder Flüssigkeitskühlung oder durch freie Konvektion weiter abkühlen, sodass sich der Matrixkunststoff verfestigt.

In einigen Ausführungsformen der Erfindung kann der Kalander 6 auch eine Mehrzahl von Kalanderwalzen aufweisen, welche der Verbundwerkstoff nach dem Austritt aus dem Imprägnierwerkzeug 5 sequentiell durchläuft. In anderen Ausführungsformen der Erfindung kann der Kalander 6 auch entfallen.

Am Ende der Vorrichtung befindet sich eine Zugeinheit 7. Auch die Zugeinheit 7 enthält eine Mehrzahl von Rollen 70, welche in einem Gestell 73 angeordnet sind. Diese können zumindest teilweise durch eine Antriebseinrichtung 75 in Rotation versetzt werden. Hierdurch wird sichergestellt, dass die Fasern kontinuierlich über die Faserspreizeinrichtung, das Imprägnierwerkzeug und den Kalander transportier werden. Dabei werden die Fasern mit dem Matrixkunststoff aus dem Extruder 4 imprägniert, in Form gepresst und schließlich auf einer Vorratstrommel als Verbundwerkstoff aufgewickelt.

Zur Inbetriebnahme der in Figur 1 gezeigten Vorrichtung wird somit zumindest eine Faserspule auf dem Gestell 23 der Faserzuführvorrichtung 2 aufgespannt. Die Fasern werden sodann durch die Faserspreizeinrichtung 3 in das geöffnete Imprägnierwerkzeug 5 und den Kalander 6 eingezogen. Schließlich werden die Fasern mit einigen Umschlingungen um die Rollen 70 in die Zugeinheit 7 eingebracht. Im Betrieb der Vorrichtung wird die Zugeinheit nun in Bewegung gesetzt und der zumindest eine Extruder 4 wird eingeschaltet, sodass die Fasern mit Schmelze des Matrixkunststoffes bedeckt werden. Der Matrixkunststoff wird dann im Imprägnierwerkzeug in die Fasern bzw. das Faserbündel eingearbeitet und nach dem Verlassen des Imprägnierwerkzeuges und dem Kalandrieren abgekühlt und verfestigt.

Figur 2 zeigt einen Ausschnitt aus dem Imprägnierwerkzeug 5. Das Imprägnierwerkzeug 5 weist eine erste bzw. untere Werkzeughälfte 51 sowie eine komplementär geformte zweite bzw. obere Werkzeughälfte 52 auf. Die untere Werkzeughälfte 51 ist fest am Gestell 53 montiert und die obere Werkzeughälfte 52 kann mit einem Antrieb 55 gehoben oder gesenkt werden. Der Antrieb 55 kann beispielsweise hydraulisch, pneumatisch oder auch ein mechanisch oder elektrisch betriebener Spindelantrieb sein. Optionale Führungshilfen stellen sicher, dass die obere bzw. zweite Werkzeughälfte 52 in vorgebbarer Lage relativ zur ersten Werkzeughälfte 51 bewegt und auch fixiert werden kann.

Wie in Figur 2 weiter ersichtlich ist, weisen die Werkzeughälften im dargestellten Ausführungsbeispiel eine Kontaktfläche 59 mit einer Wellenform auf, welche Erhebungen 512 und Vertiefungen 511 aufweist. Dies führt dazu, dass das Faserbündel wellenförmig durch das Imprägnierwerkzeug 5 läuft. Hierdurch entstehen mechanische Spannungen in den jeweiligen Kompressionszonen, welche den Matrixkunststoff rasch und zuverlässig in die Zwischenräume zwischen den einzelnen Fasern einarbeiten. Durch optionale, nicht zeichnerisch dargestellte Schwingungsanregungsmittel kann das Imprägnierwerkzeug 5 zusätzlich in Vibration versetzt werden, um auf diese Weise Lufteinschlüsse aus dem Matrixkunststoff auszutreiben und die Imprägnierung der einzelnen Fasern des Faserbündels zu verbessern.

Der Abstand der ersten Werkzeughälfte 51 und der zweiten Werkzeughälfte 52 definiert die Dicke des hergestellten Verbundwerkstoffes. Diese kann beispielsweise zwischen etwa 100 µm und etwa 400 µm liegen. In anderen Ausführungsformen der Erfindung kann der Abstand der Werkzeughälften und damit die Dicke des gefertigten Verbundwerkstoffes auch größer oder geringer sein und insbesondere zwischen etwa 150 µm und 350 µm oder zwischen etwa 150 µm und etwa 300 µm oder zwischen etwa 180 µm und etwa 250 µm betragen.

Erfindungsgemäß wird nun vorgeschlagen, das ursprünglich gassenfreie Faserbett des Imprägnierwerkzeuges 5 durch zumindest einen Separator 54 in einzelne Gassen bzw. Streifen zu unterteilen. Oftmals wird eine Mehrzahl von Separatoren 54 Verwendung finden. Im dargestellten Ausführungsbeispiel sind rein exemplarisch acht Separatoren dargestellt. In anderen Ausführungsformen der Erfindung kann die Anzahl der Separatoren auch größer oder geringer sein, beispielsweise zwischen etwa 2 und etwa 400 oder zwischen etwa 20 und etwa 300 oder zwischen etwa 30 und etwa 150.

Die Separatoren bewirken, dass der gemäß Stand der Technik in großer Breite hergestellte Verbundwerkstoff, welcher nachfolgend durch Schneiden in schmälere Streifen separiert werden muss, bereits initial als eine Mehrzahl schmälerer Streifen erzeugt wird. Dies hat den Vorteil, dass keine Fasern beim Schneiden verletzt werden, sodass sich mechanische Spannungen im Verbundwerkstoff nicht lösen und die Planlage verbessert ist. Weiterhin weist die Erfindung den Vorteil auf, dass keine Fasern an den Grenzflächen offen liegen, sodass Kapillarwirkungen vermieden werden, welche zum Eindringen von Feuchtigkeit führen würden.

Der Abstand benachbarter Separatoren definiert die Breite des hergestellten Verbundwerkstoffes. Diese kann zwischen etwa 300 µm und etwa 5000 µm betragen. In anderen Ausführungsformen der Erfindung kann der Abstand benachbarter Separatoren zwischen etwa 500 µm und etwa 4000 µm betragen. In wiederum anderen Ausführungsformen der Erfindung kann der Abstand benachbarter Separatoren zwischen etwa 600 µm und etwa 1800 µm betragen. Schließlich kann in einigen Ausführungsformen der Erfindung der Abstand benachbarter Separatoren zwischen etwa 700 µm und etwa 1500 µm betragen.

Das Imprägnierwerkzeug 5 kann weiterhin eine optionale Formlippe 571 bzw. 572 aufweisen. Die Formlippe ist ebenfalls zweiteilig ausgeführt, wobei ein erster bzw. unterer Teil 571 der Formlippe an der ersten Werkzeughälfte 51 befestigt ist und ein zweiter bzw. oberer Teil der Formlippe 572 an der zweiten Werkzeughälfte 52 befestigt ist. Die Formlippe dient dazu, dem aus dem Imprägnierwerkzeug 5 auslaufenden Verbundwerkstoff eine gewünschte, vorgebbare Querschnittsfläche zu geben. Hierzu können in die Formlippe Formgebungshilfen 58 eingebracht sein, deren Querschnitt komplementär zum Querschnitt des Verbundwerkstoffes ist.

In Figur 2 ist weiter ersichtlich, dass die Werkzeughälften 51 und 52 mit Bohrungen 56 versehen sind, deren Querschnitt komplementär zum Querschnitt der Separatoren 54 ausgebildet ist. Beim Schließen des Werkzeuges können die Separatoren 54 einer Werkzeughälfte in die Bohrungen 56 der gegenüberliegenden Werkzeughälfte eingreifen. Hierdurch wird vermieden, dass Fasern die Separatoren 54 überlaufen und die erfindungsgemäß gewünschte Trennung benachbarter Verbundwerkstoffe im Imprägnierwerkzeug aufgehoben wird.

Auch wenn die Separatoren 54 im dargestellten Ausführungsbeispiel einen runden Querschnitt bzw. eine zylindrische Form aufweisen, so ist dies lediglich als beispielhaft, jedoch nicht als beschränkend anzusehen. In anderen Ausführungsformen der Erfindung können die Separatoren 54 auch eine andere Querschnittsform aufweisen, beispielweise polygonal oder auch tropfenförmig oder elliptisch. Benachbarte Separatoren 54 können auch eine konisch zulaufende Gasse einschließen, sodass am Eingang des Imprägnierwerkzeuges 5 aufgespreizte Fasern beim Durchlauf des Imprägnierwerkzeuges 5 wieder zusammengeführt werden. Insbesondere ist es somit nicht notwendig, dass der Abstand benachbarter Separatoren und/oder die Form der Separatoren und/oder die Größe der Separatoren über die gesamte Länge des Imprägnierwerkzeuges 5 konstant bleiben.

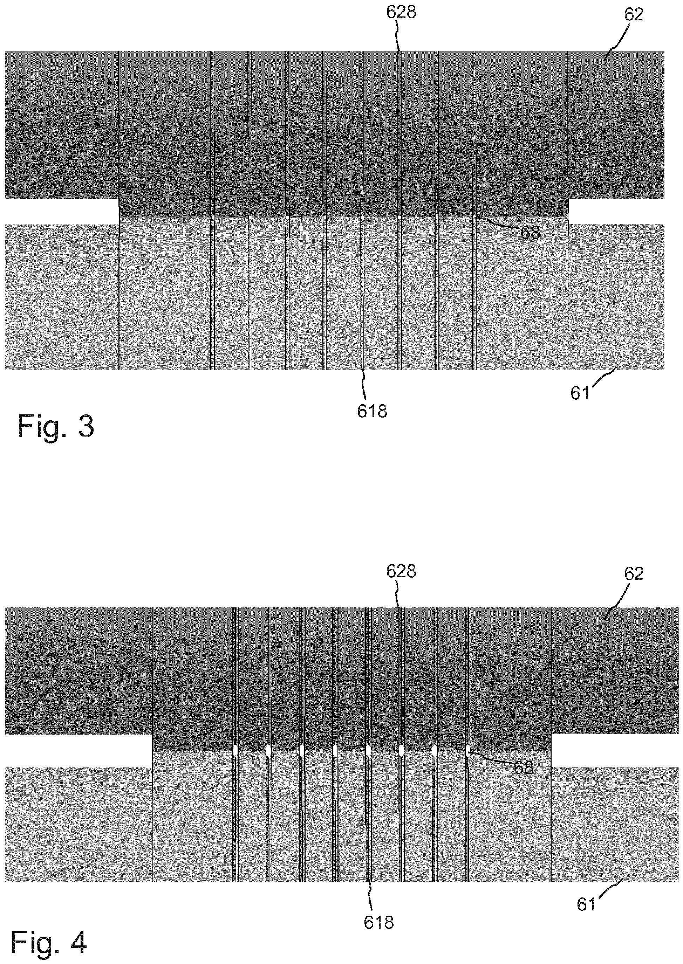

Anhand von Figur 3 wird ein erstes Ausführungsbeispiel eines Kalanders näher erläutert. Dargestellt ist eine erste bzw. untere Kalanderwalze 61 und eine zweite bzw. obere Kalanderwalze 62. Wie aus Figur 3 ersichtlich ist, sind in die Kalanderwalzen 61 und 62 Ausnehmungen 618 und 628 eingebracht. Diese führen dazu, dass in den unmittelbar aufeinander abrollenden Kalanderwalzen 61 und 62 Durchgänge 68 ausgebildet werden, durch welche der Verbundwerkstoff nach Verlassen des Imprägnierwerkzeuges 5 läuft. Der Querschnitt dieser Durchgänge 68 entspricht der Form und Größe des gewünschten Querschnittes des fertiggestellten Verbundwerkstoffes. Der seitliche Abstand benachbarter Durchgänge 68 kann mit dem seitlichen Abstand der Formgebungshilfen 58 in den Formlippen 571 und 572 entsprechen. Hierdurch können die Verbundwerkstoffe geradlinig durch das Imprägnierwerkzeug und die Kalanderwalzen laufen.

Figur 3 zeigt Durchgänge 68 mit etwa rundem Querschnitt.

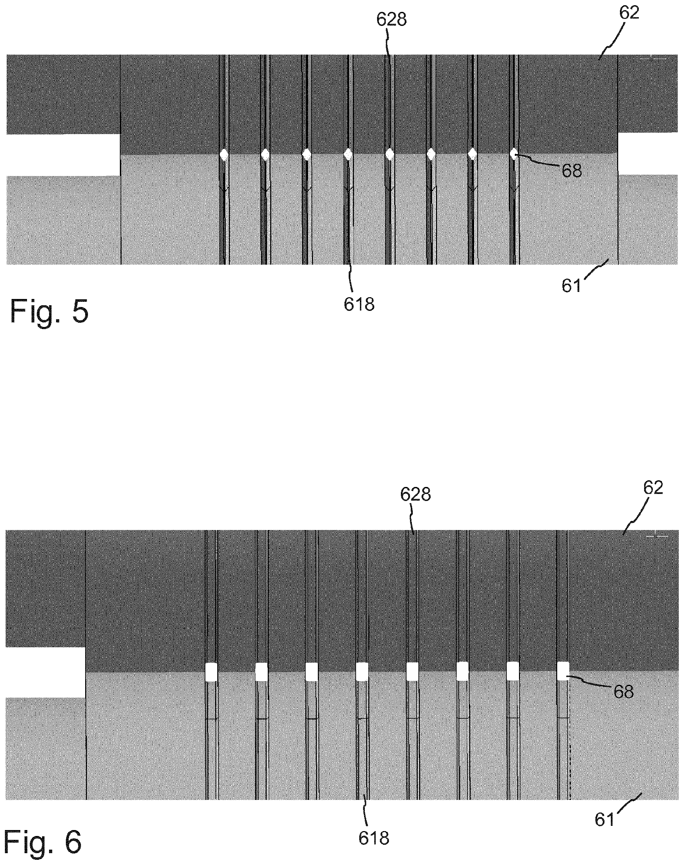

Anhand der Figuren 4, 5 und 6 werden weitere Ausführungsformen der Kalanderwalzen 61 und 62 gezeigt. Dabei bezeichnen gleiche Bezugszeichen gleiche Bestandteile der Erfindung, sodass sich die nachfolgende Beschreibung auf die wesentlichen Unterschiede beschränkt. Figur 4 zeigt Kalanderwalzen, welchen einen im wesentlichen rechteckigen Querschnitt des Verbundwerkstoffes erlauben, wobei die schmalen Seitenkanten abgerundet sind. Figur 5 zeigt Kalanderwalzen für einen im wesentlichen quadratischen Querschnitt des Verbundwerkstoffes, wobei die Diagonale des rechteckigen Querschnittes parallel zur Kalanderwalze liegt. Die Seitenflächen sind somit ungefähr 45 ° zur Achse der Kalanderwalzen 61 und 62 positioniert.

Schließlich zeigt Figur 6 Kalanderwalzen 61 und 62 für einen rechteckigen Querschnitt des hergestellten Verbundwerkstoffes.

Unterschiedliche Querschnitte des hergestellten Verbundwerkstoffes können einerseits dazu dienen, unterschiedliche Faserfüllgrade des Verbundwerkstoffe zu codieren. Weiterhin können unterschiedliche Querschnitte Verwendung finden, um unterschiedliche Bauteilgeometrien zu realisieren. Schließlich können die Querschnitte auch dazu verwendet werden, unterschiedliche Qualitäten eines an sich gleichartigen Verbundwerkstoffes für den Anwender unterscheidbar zu machen, sodass die Verarbeitung eines falschen Verbundwerkstoffes bei der Bauteilherstellung vermieden werden kann.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Vorrichtung (1) zur Fertigung eines Fasern und Matrixkunststoff enthaltenden Verbundwerkstoffes, enthaltend zumindest eine Faserzuführvorrichtung (2) und zumindest einen Extruder (4) und zumindest ein Imprägnierwerkzeug (5), **dadurch gekennzeichnet, dass**
das Imprägnierwerkzeug (5) zumindest einen Separator (54) enthält, welcher dazu eingerichtet ist, ein erstes Faserbündel von einem zweiten Faserbündel separiert durch das Imprägnierwerkzeug (5) zu führen.

2. Vorrichtung nach Anspruch 1, **dadurch gekennzeichnet, dass** das Imprägnierwerkzeug (5) eine erste Werkzeughälfte (51) und eine zweite Werkzeughälfte (52) enthält, welche jeweils eine Kontaktfläche (59) aufweisen, wobei der Separator (54) über die Kontaktfläche (59) der ersten Werkzeughälfte (51) hervorsteht und in eine zugeordnete Ausnehmung (56) der zweiten Werkzeughälfte (52) eingreift, wenn das Imprägnierwerkzeug (5) geschlossen ist.

3. Vorrichtung nach Anspruch 1 oder 2, **dadurch gekennzeichnet, dass** das Imprägnierwerkzeug (5) eine Formlippe (571) enthält, welche mit Formgebungshilfen (58) versehen ist, deren Querschnitt komplementär zum Querschnitt des Verbundwerkstoffes ist.

4. Vorrichtung nach einem der Ansprüche 1 bis 3, **dadurch gekennzeichnet, dass** der Abstand benachbarter Separatoren (54) zwischen etwa 300 µm und etwa 5000 µm oder zwischen etwa 500 µm und etwa 4000 µm oder zwischen etwa 600 µm und etwa 1800 µm oder zwischen etwa 700 µm und etwa 1500 µm beträgt.

5. Vorrichtung nach einem der Ansprüche 1 bis 4, weiterhin enthaltend zumindest einen Kalander (6) mit zumindest einer Kalanderwalze (61, 62), welche Ausnehmungen (618, 628) aufweist, deren Querschnitte komplementär zum Querschnitt des Verbundwerkstoffes sind.

6. Vorrichtung nach einem der Ansprüche 1 bis 5, **dadurch gekennzeichnet, dass** die Faserzuführvorrichtung (2) eine Faserspreizeinrichtung (3) enthält.

7. Verfahren zur Fertigung eines Fasern und Matrixkunststoff enthaltenden Verbundwerkstoffes, wobei ein Faserbündel aus zumindest einer Faserzuführvorrichtung (2) mit Matrixkunststoff aus zumindest einen Extruder (4) in zumindest einem Imprägnierwerkzeug (5) in Kontakt gebracht wird, **dadurch gekennzeichnet, dass** das Imprägnierwerkzeug (5) zumindest einen Separator (54) enthält, so dass ein erstes Faserbündel von einem zweiten Faserbündel separiert durch das Imprägnierwerkzeug (5) geführt wird.

8. Verfahren nach Anspruch 7, **dadurch gekennzeichnet, dass** das Imprägnierwerkzeug (5) eine erste Werkzeughälfte (51) und eine zweite Werkzeughälfte (52) enthält, welche jeweils eine Kontaktfläche (59) aufweisen, wobei der Separator (54) über die Kontaktfläche (59) der ersten Werkzeughälfte (51) hervorsteht und in eine zugeordnete Ausnehmung (56) der zweiten Werkzeughälfte (52) eingreift.

9. Verfahren nach einem der Ansprüche 7 oder 8, **dadurch gekennzeichnet, dass** das Imprägnierwerkzeug (5) eine Formlippe (571, 572) enthält, welche mit Formgebungshilfen (58) versehen ist, deren Querschnitt komplementär zum Querschnitt des Verbundwerkstoffes ist.

10. Verfahren nach einem der Ansprüche 7 bis 9, **dadurch gekennzeichnet, dass** die Breite des Verbundwerkstoffes zwischen etwa 300 µm und etwa 5000 µm oder zwischen etwa 500 µm und etwa 4000 µm oder zwischen etwa 600 µm und etwa 1800 µm oder zwischen etwa 700 µm und etwa 1500 µm beträgt.

11. Verfahren nach einem der Ansprüche 7 bis 10, **dadurch gekennzeichnet, dass** die Dicke des Verbundwerkstoffes zwischen etwa 100 µm und etwa 400 µm oder zwischen etwa 150 µm und etwa 350 µm oder zwischen etwa 150 µm und etwa 300 µm oder zwischen etwa 180 µm und etwa 250 µm beträgt.

12. Verfahren nach einem der Ansprüche 7 bis 11, **dadurch gekennzeichnet, dass** der Verbundwerkstoff nach dem Verlassen des Imprägnierwerkzeuges (5) zumindest einem Kalander (6) zugeführt wird, welcher zumindest eine Kalanderwalze (61, 62) enthält, welche Ausnehmungen (618, 628) aufweist, deren Querschnitte komplementär zum Querschnitt des Verbundwerkstoffes sind.

13. Verfahren nach einem der Ansprüche 7 bis 12, **dadurch gekennzeichnet, dass** die Fasern vor dem Einlauf in das Imprägnierwerkzeug (5) gespreizt werden.
